# EUROPÄISCHE PATENTSCHRIFT

(11) **EP 0 811 471 B1**
(45) Veröffentlichungstag und Bekanntmachung des Hinweises auf die Patenterteilung: **04.04.2001**
(21) Anmeldenummer: 97108558.4
(22) Anmeldetag: 28.05.1997
(51) Int. Cl.: B27N 3/28

(54) **Strangpressverfahren zur kontinuierlichen Herstellung von organisch gebundenen Formteilen und Einrichtung zur Durchführung des Verfahrens**
Extrusion method for the continuous production of products with an organic binder, and equipment therefor
Procédé d'extrusion pour la fabrication en continu de produits avec un liant organique et outillage de mise en oeuvre

(30) Priorität: 05.06.1996 DE 19622521
(43) Veröffentlichungstag der Anmeldung: 10.12.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: Buchholzer, Paul, Dipl.-Ing., 38179 Schwülper (DE)

(56) Entgegenhaltungen:
- DE-A- 1 528 292
- DE-A- 2 539 674
- DE-B- 1 174 494
- DE-B- 1 198 545
- US-A- 5 185 115

## Beschreibung

Die Erfindung betrifft ein Strangpreßverfahren zur kontinuierlichen Herstellung von organisch gebundenen Formteilen mit räumlicher Formgebung.

Es sind Verfahren zur Herstellung von organisch gebundenen Formteilen bekannt, die auf diskontinuierlich arbeitenden Anlagen durchgeführt werden. Die meisten kontinuierlich arbeitenden Anlagen (Pressen) sind zur Herstellung von Platten, jedoch nicht zur Herstellung von Formteilen mit räumlicher Formgebung geeignet.

Bei dem Okal-Verfahren werden beleimte Holzspäne durch eine Zuteilungsvorrichtung dosiert in die Öffnung einer senkrechten Strangpresse eingegeben. Die Späne werden mit einem Preßstempel durch einen Formkanal hindurchgepreßt, der von außen mit Dampf oder Heißwasser erwärmt wird. Dieses Verfahren wurde primär als Spanplattenherstellungsverfahren entwickelt. Durch Einbau von Röhren in der Strangpresse können Platten mit durchlaufenden Hohlräumen hergestellt werden. Jedoch ist eine Herstellung von Formteilen mit räumlicher Formgebung nach diesem Verfahren nicht vorgesehen und nicht möglich.

Aufgabe der vorliegenden Erfindung ist es ein Strangpreßverfahren sowie eine Einrichtung zur Durchführung dieses Verfahrens anzugeben, bei dem es möglich ist, Formteile mit nahezu beliebiger räumlicher Formgebung aus organisch gebundenen Spänen oder Fasern herzustellen.

Diese Aufgabe wurde durch das im Anspruch 1 angegebene Verfahren gelöst. Eine Einrichtung zur Durchführung dieses Verfahrens ist im Anspruch 4 angegeben. Die Unteransprüche stellen vorteilhafte Weiterbildungen dar.

Das Verfahren wird wie folgt durchgeführt: Lignocellulosehaltige Späne oder Fasern werden mit einem organischen Bindemittel in Beleimungsmaschinen beleimt und die beleimten Späne über Streustationen auf Abwurfbänder oder Transportbänder gleichmäßig gestreut und über diese der Presse zugeführt. In einem Kanal der Presse werden die Späne bzw. Fasern im ersten Schritt des Verfahrens verdichtet. Der Preßkanal entspricht der Querschnittsform des herzustellenden Formteiles und wird außen- und innenseitig durch Wandungen begrenzt. Die Späne bzw. Fasern werden in dem Verdichtungsabschnitt des Preßkanals durch einen bewegbaren, absenkbaren Kolben, der sich in diesen Abschnitt des Preßkanals bewegt, verdichtet. Der Verdichtungsabschnitt ist innenseitig durch die Wandung eines feststehenden Stempels und außenseitig durch die äußere Wand, die in diesem Abschnitt parallel zum feststehenden Preßstempel verläuft, begrenzt. Die in diesem Abschnitt des Preßkanals überverdichteten Späne bzw. Fasern durchlaufen im nächsten Schritt des Verfahrens ein Relaxionsabschnitt, in der das Material auf die Solldicke der Formteilwandung rückfedert. Die Relaxionszone des Preßkanals ist dadurch gebildet, daß der feststehende Stempel an seinem einen Ende ein sich verjüngendes Teil aufweist, und daß dadurch der Querschnitt des Preßkanals sich erweitert, wodurch das überverdichtete Material in diesem Kanalabschnitt die Spannungen abbaut. Anschließend, im nächsten Verfahrensschritt wird das relaxierte Formteil durch einen beheizten Formkanal übernommen. In diesem Verfahrensschritt findet die Aushärtung des Formteiles statt. Der Querschnitt des Formkanals ändert sich gegenüber diesem des Relaxionsabschnittes nicht. Das Formteil wird zwischen einer inneren Gleitform, die sich an das sich konisch verjüngende Teil der Relaxionszone anschließt und Preßbändem sowie Preßplattenbändem geführt. Die Preßbänder und die Preßplattenbänder können beheizt sein, was die Aushärtung des Formteiles beschleunigt. Die innere Gleitform weist vorteilhafterweise Perforierungen auf, durch welche der in den Innenraum der Presse eingeleitete überhitzte Wasserdampf zum Formteil gelangt und seine Aushärtung durch eine schnelle Erwärmung beschleunigt. Anschließend durchläuft das Formteil einen Entdampfungsabschnitt, in dem der Transport des Formteiles durch die äußeren Preßbänder sowie Preßplattenbänder und den nicht beheizten Abschnitt der perforierten Gleitform erfolgt. Das endlos aus der Presse austretende Formteil wird mit Hilfe von mitlaufenden Trenneinrichtungen auf die gewünschte Länge abgelängt.

Der Aufbau der Einrichtung zur Durchführung des Verfahrens ist anhand eines Ausführungsbeispieles in den nachfolgenden Figuren näher erläutert. Es zeigen:

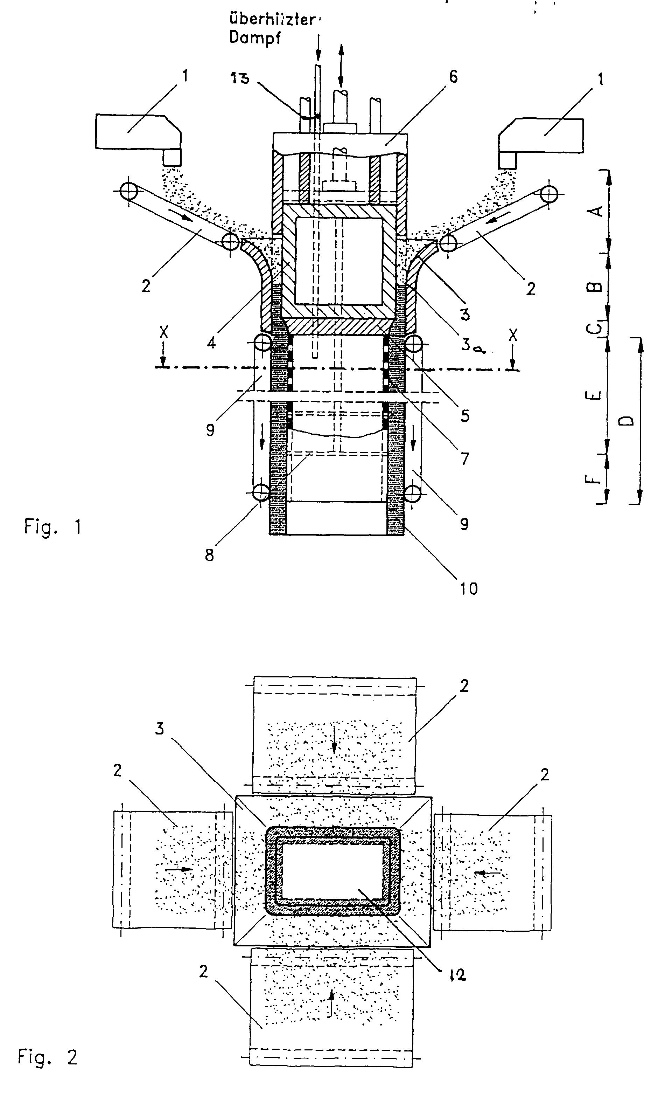

Fig. 1 einen Schnitt durch die schematische Darstellung der Strangpresse
Fig. 2 eine schematische Darstellung einer Aufsicht auf die Strangpresse der Fig. 1

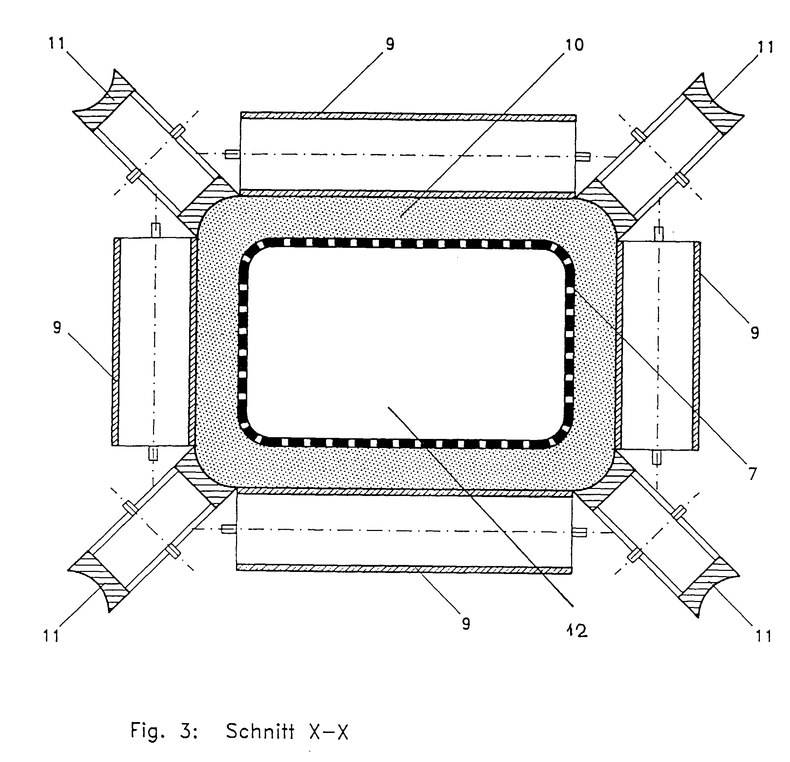

Fig. 3 den Schnitt xx der Fig. 1

Zu der Strangpresse gehören Streustationen 1, die Späne oder Fasern gleichmäßig auf Abwurf-/Transportbänder 2 streuen, und die Späne bzw. Fasern anschließend dem Trichter 3 der Presse zuführen. Ferner weist die Presse einen feststehenden Preßstempel 4 mit einem an seinem einen Ende angeordneten Verjüngungsteil 5 auf, dem sich weiter unten eine perforierte Gleitform 7 anschließt. Ein bewegbarer absenkbarer Kolben 6 verdichtet die in den Trichter 3 eingegebenen Späne bzw. Fasern. Ferner weist die Einrichtung Preßbänder 9 und Preßplattenbänder 11 auf, die in dem Bereich der Transport- und Aushärtungsabschnittes des Kanals angeordnet sind. Die Preßbänder 9 und die Preßplattenbänder 11 laufen um, wobei deren umlaufende Bewegegung durch die schubweise Bewegung des Formteiles 10 nach unten verursacht wird. In den Innenraum 12 der Presse wird über Zuleitungen 13 überhitzter Wasserdampf eingeleitet, der über die perforierte Gleitform 7 zum aushärtenden Formteil 10 gelangt und dessen Aushärtung beschleunigt. Die Preßbänder 9 und die Preßplattenbänder 11 können beheizt sein. Auch diese Maßnahme trägt zur Beschleunigung des Aushärtevorganges des Formteiles 10 bei. Der zu beheizende Abschnitt der inneren Gleitform 7 kann variiert werden, indem das entsprechende Volumen des Innenraumes der Presse mittels einem abdichtenden Kolben 8 verändert wird. Die Form und Abmessungen der einzelnen Pressenbauteile richten sich nach der Querschnittsform und den Abmessungen des herzustellenden Formteiles 10.

Wie bereits oben beschrieben, durchläuft das herzustellende Formteil verschiedene Abschnitte des Kanals, die den einzelnen Verfahrensschritten entsprechen. So werden in dem Streuabschnitt A die Späne bzw. Fasern mittels Streustationen 1 auf die Transportbänder 2 gestreut und in den Trichter 3 der Presse weitertransportiert. In dem Verdichtungsabschnitt B wird das Material in dem Preßkanal zwischen der Umfangswand des festen Stempels 4 und der äußeren Wandung der Presse durch einen beweglichen Kolben 6 verdichtet. In derm Relaxionsabschnitt C, der dadurch entsteht, daß der feste Preßstempel 4 an seinem Ende einen Verjüngungsteil 5 aufweist, und daß sich dadurch der Preßkanal erweitert, erfolgt die Entspannung des in dem Verdichtungsabschnitt B überverdichteten Materials. Auf den Relaxionsabschnitt C folgt ein Aushärtungsabschnitt E und ein Entdampfungsabschnitt F. In dem Aushärtungsabschnitt E wird das Formteil 10 im Formkanal zwischen den Preßbändern 9 und Preßplattenbändern 11 außenseitig, und einer perforierten, beheizten Gleitform 7 innenseitig geführt. Dabei erfolgt die Entdampfung des Formteiles 10 durch den nicht beheizten Abschnitt der perforierten Gleitform 7 innenseitig und die Preßbänder 9 sowie Preßplattenbänder 4 außenseitig. Der in dem Formteil 10 gespeicherte Dampf kann dadurch entweichen und das Formteil 10 auskühlen. Anstelle der Preßbänder 9 und der Preßplattenbänder 11 kann auch eine beheizte Außengleitform für den Formteiltransport vorgesehen sein. Die Außengleitform ist nicht beweglich.

Es kann auch vorgesehen sein, daß die innere Gleitform 7 keine Perforierungen aufweist. In diesem Fall erwärmt, der in den Innenraum der Presse eingeleitete, überhitzte Wasserdampf die innere Gleitform 7 und die durch ihre Erwärmung den Aushärtevorgang des Formteiles 10 unterstützt. Am schnellsten läuft die Aushärtung in dem Aushärteabschnitt E dann ab, wenn sowohl die Preßbänder 9 und die Preßplattenbänder 11 beheizt sind und die innere Gleitform 7 perforiert ist, zum direkten Durchtritt des überhitzten Wasserdampfes bis zum Formteil 10.

## Patentansprüche

1. Strangpreßverfahren zur kontinuierlichen Herstellung von organisch gebundenen Formteilen (10) mit räumlicher Formgebung aus Holzspänen oder -fasern wobei die beleimten lignocellulosehaltigen Fasern und/oder Späne über Streustationen (1) der Strangpresse zugeführt werden und im ersten Schritt des Verfahrens in einem Kanal zwischen einem fest angeordneten Stempel (4) und der Außenwand (3a) der Presse verdichtet werden, und im zweiten Schritt des Verfahrens die verdichteten Werkstoffe in einem Kanalabschnitt, der zwischen einem sich verjüngenden, am Ende des festen Stempels (4) angeordneten Verjüngungsteil (5) und der Außenwand (3a) der Presse liegt, relaxieren und daß das Formteil (10) anschließend in einem Formkanal zwischen beweglichen, außenseitig angeordneten Preßbändern (9) /Preßplattenbändern (11) und einer inneren, perforierten, sich an den verjüngenden Teil (5) des festen Stempels (4) anschließenden Gleitform (7) transportiert wird und dabei aushärtet, wobei zur Beschleunigung des Aushärtungsprozesses in den Innenraum (12) der Strangpresse überhitzter Dampf eingeleitet wird.

2. Verfahren nach Anspruch 1, **dadurch gekennzeichnet,** daß das Formteil (10) nach der Aushärtung entdampft.

3. Verfahren nach Anspruch 1 oder 2, **dadurch gekennzeichnet,** daß das in die perforierte Gleitform (7) eingeleitete Dampfvolumen variabel einstellbar ist.

4. Einrichtung zur Durchführung des Verfahrens nach einem der vorangegangenen Ansprüche mit einer Dosier-/Streuvorrichtung (1) für Späne oder Fasern mit einem Pressekanal in dem das Formteil (10) geformt wird und mit einem bewegbaren Kolben (6) und einem unbewegbaren Stempel (4) und mit Führungsmitteln (9, 11, 7) zum Führen des Formteiles (10) während des Aushärtevorganges, wobei der Pressekanal, dessen Form der Form des herzustellenden Formteiles (10) entspricht, einen Verdichtungsabschnitt (B) aufweist zwischen dem feststehenden Stempel (4) und einer äußeren Begrenzungswand (3a) und wobei sich in diesem Abschnitt (B) der absenkbare/bewegbare, an der äußeren Wandung des festen Stempels (4) gleitende Kolben (6) bewegt und mit einem sich an den Verdichtungsabschnitt (B) anschließenden Relaxionsabschnitt (C), dessen Querschnitt zwischen einem sich verjüngenden Teil (5) des feststehenden Stempels (4) und der äußeren Wandung (3a) liegt, und mit einem Aushärtungsabschnitt (E), zwischen der äußeren Wandung, die in diesem Abschnitt (E) durch umlaufende Preßbänder (9) und Preßplattenbänder (11) gebildet ist, und einer inneren Gleitform (7) und in dem das Formteil (10) aushärtet und transportiert wird und einem Entdampfungsabschnitt (F) dessen äußere Wandung durch die Preßbänder (9) und die Preßplattenbänder (11) gebildet ist und in dem das Formteil (10) von innen durch einen nicht beheizten Abschnitt der inneren Gleitform begrenzt wird.

5. Einrichtung nach Anspruch 4, **dadurch gekennzeichnet,** daß die äußere Begrenzungswand (3a) im Verdichtungsabschnitt (B) durch eine sich trichterförmig zu den Abwurfbändern (2) der Streuvorrichtung hin öffnende Wand (3) gebildet ist.

6. Einrichtung nach Anspruch 4 oder 5, **dadurch gekennzeichnet,** daß die innere Gleitform (7) perforiert ist zum Durchlaß des in den Innenraum (12) der Presse eingeleiteten überhitzten Dampfes.

7. Einrichtung nach einem der Ansprüche 4 bis 6, **dadurch gekennzeichnet,** daß die Preßbänder (9) und die Preßplattenbänder (11) beheizt sind.

8. Einrichtung nach einem der Ansprüche 4 bis 7, **dadurch gekennzeichnet,** daß die Preßbänder (9) und die Preßplattenbänder (11) durch die schubweise Bewegung des Formteils (10) mitgenommen werden und dadurch umlaufen.

9. Einrichtung nach einem der Ansprüche 4 bis 8, **dadurch gekennzeichnet,** daß anstelle der beheizten Preßbänder (9) und der Preßplattenbänder (11) eine beheizte Außengleitform für den Formteiltransport vorgesehen ist.

10. Einrichtung nach einem der Ansprüche 4 bis 9, **dadurch gekennzeichnet**, daß ein die Gleitform (7) variabel abschließender Kolben (8) vorgesehen ist.

## Claims

1. An extrusion press process for continuous production of organically bound moulded parts (10) with a three-dimensional form of wood particles or fibres, wherein the glue-treated fibres and/or particles containing ligno-cellulose are fed through spreader stations (1) of the extrusion press and are compacted in the first step of the process in a channel between a fixed male form (4) and the outer wall (3a) of the press and in the second step of the process, the compacted materials relax in a canal section which lies between a tapering tapered part (5) arranged on the end of the fixed male form (4) and the outer wall (3a) of the press, and in that the moulded part (10) is finally transported in a moulding channel between movable pressure belts (9)/pressure plate belts (11) arranged on the outside and an inner, perforated slide mould adjoining the tapered part (5) of the fixed male form and is thereby hardened, wherein superheated steam is introduced to the interior (12) of the extrusion press to accelerate the hardening process.

2. A process according to claim 1, characterized in that the moulded part (10) is cleared from vapour after hardening.

3. A process according to claim 1 or 2, characterized in that the volume of steam introduced to the perforated slide mould (7) is adjustable.

4. Apparatus for implementing the process according to any of the preceding claims, with a metering and spreading arrangement (1) for particles or fibres, with a press channel, in which the moulded part (10) is shaped, and with a movable piston (6) and an immovable male form (4) and guide means (9, 11,7) for guiding the moulded part (10) during the hardening process, wherein the press channel, whose shape corresponds to the shape of the moulded part (10) to be produced, has a compacting section (B) between the fixed male form (4) and an outer bounding wall (3a) and wherein the piston (6) which can be lowered/moved slides on the outer wall of the fixed male form (4) in this section (B). and with a relaxation section (C) which adjoins the compaction section (B) and has a cross-section lying between a tapering part (5) ofthe fixed male form (4) and the outer wall (3a), and with a hardening section (E) between the outer wall which, in this section (E) is formed by circulating pressure belts (9) and pressure plate belts (11), and an inner slide mould (7), in which section the moulded part (1) is hardened and transported, and a vapour clearing section (F) whose outer wall is formed by the pressure belts (9) and the pressure plate belts (11) and in which the moulded part (10) is bounded on the inside by an un-heated section of the inner slide mould.

5. Apparatus according to claim 4, characterized in that the outer bounding wall (3a) in the compacting section (B) is formed by a funnel-shaped wall (3) opening to the discharge belts (2) of the spreading device.

6. Apparatus according to claim 4 or 5, characterized in that the inner slide mould (7) is perforated to allow passage of the superheated steam passed into the interior (12) of the press.

7. Apparatus according to any of claims 4 to 6, characterized in that the pressure belts (9) and the pressure plate belts (11) are heated.

8. Apparatus according to any of claims 4 to 7, characterized in that the pressure belts (9) and the pressure plate belts (11) are entrained by the pushing movement of the moulded part (10) and accordingly circulate.

9. Apparatus according to any of claims 4 to 8, characterized in that a heated outer slide mould is provided for transport of the moulded part, instead of the heated pressure belts (9) and pressure plate belts (11).

10. Apparatus according to any of claims 4 to 9, characterized in that a piston (8) which closes off the slide mould (7) variably is provided.

## Revendications

1. Procédé d'extrusion pour la fabrication en continu de pièces moulées (10) liées par un liant organique et ayant une forme tridimensionnelle, ces pièces étant composées de copeaux ou de fibres de bois et les fibres et/ou copeaux à cellulose de bois étant enduits de colle pour être fournis par des postes de distribution (1) à la presse d'extrusion et être comprimés, au cours d'une première étape du procédé, dans un canal formé entre un poinçon fixe (4) et la paroi extérieure (3a) de la presse, tandis que, dans une seconde étape du procédé, les matières comprimées se détendent dans un segment de canal compris entre une pièce à rétrécissement (5) prévue sur l'extrémité du poinçon fixe (4) et la paroi extérieure (3a) de la presse, la pièce moulée (10) étant ensuite transportée dans le canal de moulage entre des bandes de compression (9)/bandes à plaques de compression (11) prévues sur le côté extérieur, et un moule lisse (7) intérieur, perforé, faisant suite à la partie rétrécie (5) du poinçon fixe (4) , pour effectuer ainsi sa prise, et l'accélération du procédé de prise est assurée par l'introduction de vapeur surchauffée dans le volume intérieur (12) de la presse d'extrusion.

2. Procédé selon la revendication 1,
caractérisé en ce que la pièce moulée (12) est libérée de la vapeur après la prise.

3. Procédé selon la revendication 1 ou 2,
caractérisé en ce que
le moule lisse (7), perforé, permet de régler l'introduction d'un volume de vapeur variable.

4. Installation pour la mise en oeuvre du procédé selon l'une quelconque des revendications précédentes,
comportant
un dispositif de dosage/répartition (1) de copeaux ou de fibres avec un canal de compression dans lequel la pièce moulée (10) est mise en forme et un piston (6) mobile par rapport à celui-ci, ainsi qu'un poinçon (4) fixe et des moyens de guidage (9, 11, 7) pour guider la pièce moulée (10) pendant l'opération de prise, le canal de compression dont la forme correspond à celle de la pièce à fabriquer (10) , présentant un segment de compression (B) entre le poinçon fixe (4) et une paroi extérieure (3a) et le piston coulissant(6), se déplaçant dans ce segment (B) par un mouvement de montée et de descente, en glissant sur la paroi extérieure du poinçon fixe (4) , un segment de relaxation (C) faisant suite au segment de compression (B) , et dont la section est comprise entre une partie rétrécie (5) du poinçon fixe (4) et la paroi extérieure (3a), un segment de prise (E) entre la paroi extérieure formée dans ce segment (E) par les bandes de compression (9) et les bandes à plaques de compression (11), en mouvement, un moule lisse intérieur (7) , dans lequel la pièce moulée (10) durcit et est transportée, et un segment d'évacuation de vapeur (F), dont la paroi extérieure est formée par les bandes de compression (9) et les bandes à plaques de compression (11) , et dans lequel la pièce moulée (10) est délimitée à l'intérieur par un segment non chauffé du moule lisse intérieur.

5. Installation selon la revendication 4,
caractérisée en ce que
la paroi extérieure (3a) est formée dans le segment de compression (B) par une paroi (3) ouverte en forme d'entonnoir vers les bandes d'éjection (2) du dispositif de distribution.

6. Installation selon la revendication 4 ou 5,
caractérisée en ce que
le moule lisse intérieur (7) est perforé pour permettre le passage de la vapeur surchauffée vers le volume intérieur (12) de la presse.

7. Installation selon l'une quelconque des revendications 4 à 6,
caractérisée en ce que
les bandes de compression (9) et les bandes à plaques de compression (11) sont chauffées.

8. Installation selon l'une quelconque des revendications 4 à 7,
caractérisée en ce que
les bandes de compression (9) et les bandes à plaques de compression (11) sont entraînées par le mouvement pas à pas de la pièce moulée (10), et circulent ainsi.

9. Installation selon l'une quelconque des revendications 4 à 8,
caractérisée en ce qu'
à la place des bandes de compression (9) et des bandes de plaques de compression (11) chauffées, on a un moule lisse extérieur chauffé pour le transport de la pièce moulée.

10. Installation selon l'une quelconque des revendications 4 à 9,
caractérisée par
un piston (8) qui ferme de manière variable le moule lisse (7).
